# EUROPEAN PATENT APPLICATION

(11) **EP 4 518 362 A1**
(43) Date of publication of application: **05.03.2025**
(21) Application number: 23829562.0
(22) Date of filing: 03.04.2023
(51) Int. Cl.: H04W 4/02

(54) **INITIATION DEVICE, RESPONSE DEVICE AND INFORMATION TRANSMISSION METHOD**

(30) Priority: 27.06.2022 CN 202210737465
(71) Applicant: Huawei Technologies Co., Ltd., Shenzhen, Guangdong 518129 (CN)
(72) Inventor: YU, Qian, Shenzhen, Guangdong 518129 (CN); MA, Chao, Shenzhen, Guangdong 518129 (CN); HU, Shichang, Shenzhen, Guangdong 518129 (CN)
(74) Representative: Körber, Martin Hans
(86) International application number: PCT/CN2023/085847
(87) International publication number: WO 2024/001372

(57) **Abstract**

Embodiments of this application disclose an initiating device, a responding device, and an information transmission method. Specifically, a sending time interval at which the initiating device sends a plurality of ranging signal frames to the responding device is randomly generated, so that an attacker cannot determine a rule of sending the ranging signal by the initiating device to the responding device, and cannot send an interference signal at a same moment to perform interference and an attack, thereby ensuring information security of the electronic devices during interactive communication.

## Description

This application claims priority to Chinese Patent Application No. CN202210737465.X, filed with the China National Intellectual Property Administration on June 27, 2022 and entitled "INITIATING DEVICE, RESPONDING DEVICE, AND INFORMATION TRANSMISSION METHOD", which is incorporated herein by reference in its entirety.

### TECHNICAL FIELD

Embodiments of this application relate to the communication field, and in particular, to an initiating device, a responding device, and an information transmission method.

### BACKGROUND

With the advent of an internet of everything era, technologies of communication between electronic devices also develop accordingly.

In a scenario in which electronic devices communicate with each other, for example, an ultra-wideband (ultra-wideband, UWB) wireless ranging technology is used to implement interworking and positioning between the electronic devices, a signal needs to be exchanged between the electronic devices.

However, an attacker may find a rule of exchanging the signal between the electronic devices, and send an interference signal. As a result, information security of the electronic devices cannot be ensured.

### SUMMARY

Embodiments of this application provide an initiating device, a responding device, and an information transmission method, to ensure information security of electronic devices during interactive communication. Embodiments of this application further provide a corresponding communication system, electronic device, computer-readable storage medium, and the like.

A first aspect of this application provides an initiating device. The initiating device includes a first sending circuit and a receiving circuit. The first sending circuit is configured to send a ranging signal to a responding device, the ranging signal includes at least a first ranging signal frame and a second ranging signal frame, and a first sending time interval between the first ranging signal frame and the second ranging signal frame is randomly generated. The receiving circuit is configured to receive measurement information returned, based on the ranging signal, by the responding device.

In this application, both the initiating device and the responding device are mobile terminals, and the initiating device and the responding device perform interactive communication based on an impulse radio-UWB (impulse radio-UWB, IR-UWB) technology. The ranging signal and the measurement information include data, for example, data including a synchronization (SYNC) field and a CIR training sequence (CIR training sequence, CTS). The SYNC field is used to complete time-frequency synchronization of the ranging signal, and the CTS is used to calculate a CIR and complete ranging.

In this application, the first sending circuit and the receiving circuit are integrated into one UWB chip of the initiating device, and a first receiving circuit and a sending circuit are integrated into one UWB chip of the responding device.

In this application, before the initiating device sends the ranging signal, both the initiating device and the responding device obtain the same first sending time interval that is randomly generated. The initiating device sends the second ranging signal frame after the first sending time interval elapses since the initiating device sends the first ranging signal frame.

In this application, the ranging signal may further include a third ranging signal frame, a fourth ranging signal frame, a fifth ranging signal frame, and the like, and communication manners of the third ranging signal frame, the fourth ranging signal frame, the fifth ranging signal frame, and the like are the same as those of the first ranging signal frame and the second ranging signal frame.

According to the first aspect, a sending time interval at which the initiating device sends a plurality of ranging signal frames to the responding device is randomly generated, so that an attacker cannot determine a rule of sending the ranging signal by the initiating device to the responding device, and cannot send an interference signal at a same moment to perform interference and an attack, thereby ensuring information security of electronic devices during interactive communication.

In a possible implementation of the first aspect, the initiating device further includes a second sending circuit. The second sending circuit is configured to send an auxiliary signal to the responding device, a second sending time interval between the auxiliary signal and the ranging signal is randomly generated, and the auxiliary signal is used to carry configuration information of the ranging signal.

In this possible implementation, the initiating device and the responding device use a narrow band assisted ultra-wideband (narrow band assisted ultra-wideband, NBA-UWB) technology. Compared with the IR-UWB technology, the NBA-UWB technology can reduce an area, power consumption, and costs of a wideband.

In a possible implementation of the first aspect, the ranging signal is an ultra-wideband frame, and the auxiliary signal is a narrowband frame.

In this possible implementation, the narrowband frame carries the configuration information of the ultra-wideband frame, and provides time synchronization information for the ultra-wideband frame. The ultra-wideband frame includes the CTS to complete ranging. This improves implementability of the solution.

In a possible implementation of the first aspect, the second ranging signal frame is received by the responding device after the first sending time interval elapses since the responding device receives the first ranging signal frame.

In this possible implementation, the responding device receives the second ranging signal frame after the first sending time interval elapses since the responding device receives the first ranging signal frame, and the responding device receives the second ranging signal frame at a specified moment, to avoid receiving an interference signal sent by an attacker. When an attacker cannot determine a rule of sending the ranging signal by the initiating device to the responding device, and randomly sends the interference signal, the responding device does not receive the interference signal, thereby further improving the information security of the electronic devices during interactive communication.

In a possible implementation of the first aspect, the first sending circuit is further configured to send a time ciphertext to the responding device, for the responding device to decrypt the time ciphertext based on a preset key, to obtain the first sending time interval, where the time ciphertext is obtained by encrypting the first sending time interval by the initiating device based on the preset key.

In this possible implementation, the initiating device specifically uses a symmetric key algorithm, so that the responding device can also obtain a same sending time interval. This improves the implementability of the solution. In addition, the symmetric key algorithm cannot be cracked when an attacker cannot obtain a key. This further improves the information security of the electronic devices during interactive communication.

In a possible implementation of the first aspect, the first sending time interval is randomly generated by the initiating device and the responding device based on a same algorithm.

In this possible implementation, the initiating device specifically randomly generates the sending time interval by using an algorithm the same as that used by the responding device. This improves the implementability of the solution. An attacker cannot determine an algorithm and a parameter that are used by the initiating device and the responding device. This further improves the information security of the electronic devices during interactive communication.

In a possible implementation of the first aspect, the initiating device further includes a ranging circuit. The ranging circuit is configured to determine a distance between the initiating device and the responding device based on a sending time for the ranging signal and a receiving time for the measurement information.

In this possible implementation, after completing communication interaction with the responding device, the initiating device may determine the distance between the initiating device and the responding device based on the sending time for the ranging signal and the receiving time for the measurement information. This improves the implementability of the solution.

A second aspect of this application provides a responding device. The responding device includes a first receiving circuit and a sending circuit. The first receiving circuit is configured to receive a ranging signal sent by an initiating device, the ranging signal includes at least a first ranging signal frame and a second ranging signal frame, and a first sending time interval between the first ranging signal frame and the second ranging signal frame is randomly generated. The sending circuit is configured to send measurement information to the initiating device based on the ranging signal.

In a possible implementation of the second aspect, the responding device further includes a second receiving circuit. The second receiving circuit is configured to receive an auxiliary signal sent by the initiating device, a second sending time interval between the auxiliary signal and the ranging signal is randomly generated, and the auxiliary signal is used to carry configuration information of the ranging signal.

In a possible implementation of the second aspect, the ranging signal is an ultra-wideband frame, and the auxiliary signal is a narrowband frame.

In a possible implementation of the second aspect, the first receiving circuit is specifically configured to receive the second ranging signal frame after the first sending time interval elapses since the first receiving circuit receives the first ranging signal frame.

In a possible implementation of the second aspect, the first receiving circuit is further configured to: receive a time ciphertext sent by the initiating device, and decrypt the time ciphertext based on a preset key, to obtain the first sending time interval, where the time ciphertext is obtained by encrypting the first sending time interval by the initiating device based on the preset key.

In a possible implementation of the second aspect, the first sending time interval is randomly generated by the initiating device and the responding device based on a same algorithm.

A third aspect of this application provides an initiating device. The initiating device includes a first sending circuit, a second sending circuit, and a receiving circuit. The first sending circuit is configured to send an auxiliary signal to a responding device. The second sending circuit is configured to send a ranging signal to the responding device, a first sending time interval between the auxiliary signal and the ranging signal is randomly generated, and the auxiliary signal is used to carry configuration information of the ranging signal. The receiving circuit is configured to receive measurement information returned, based on the ranging signal, by the responding device.

In a possible implementation of the third aspect, the ranging signal includes at least a first ranging signal frame and a second ranging signal frame, and a second sending time interval between the first ranging signal frame and the second ranging signal frame is randomly generated.

In a possible implementation of the third aspect, the ranging signal is an ultra-wideband frame, and the auxiliary signal is a narrowband frame.

In a possible implementation of the third aspect, the ranging signal is received by the responding device after the first sending time interval elapses since the responding device receives the auxiliary signal.

In a possible implementation of the third aspect, the first sending circuit is further configured to send a time ciphertext to the responding device, for the responding device to decrypt the time ciphertext based on a preset key, to obtain the first sending time interval, where the time ciphertext is obtained by encrypting the first sending time interval by the initiating device based on the preset key.

In a possible implementation of the third aspect, the first sending time interval is randomly generated by the initiating device and the responding device based on a same algorithm.

In a possible implementation of the third aspect, the initiating device further includes a ranging circuit. The ranging circuit is configured to determine a distance between the initiating device and the responding device based on a sending time for the ranging signal and a receiving time for the measurement information.

A fourth aspect of this application provides a responding device. The responding device includes a first receiving circuit, a second receiving circuit, and a sending circuit. The first receiving circuit is configured to receive an auxiliary signal sent by an initiating device. The second receiving circuit is configured to receive a ranging signal sent by the initiating device, a first sending time interval between the auxiliary signal and the ranging signal is randomly generated, and the auxiliary signal is used to carry configuration information of the ranging signal. The sending circuit is configured to send measurement information to the initiating device based on the ranging signal.

In a possible implementation of the fourth aspect, the ranging signal includes at least a first ranging signal frame and a second ranging signal frame, and a second sending time interval between the first ranging signal frame and the second ranging signal frame is randomly generated.

In a possible implementation of the fourth aspect, the ranging signal is an ultra-wideband frame, and the auxiliary signal is a narrowband frame.

In a possible implementation of the fourth aspect, the first receiving circuit is specifically configured to receive the second ranging signal frame after the first sending time interval elapses since the first receiving circuit receives the first ranging signal frame.

In a possible implementation of the fourth aspect, the first receiving circuit is further configured to: receive a time ciphertext sent by the initiating device, and decrypt the time ciphertext based on a preset key, to obtain the first sending time interval, where the time ciphertext is obtained by encrypting the first sending time interval by the initiating device based on the preset key.

In a possible implementation of the fourth aspect, the first sending time interval is randomly generated by the initiating device and the responding device based on a same algorithm.

A fifth aspect of this application provides an information transmission method. The method includes: An initiating device sends a ranging signal to a responding device, where the ranging signal includes at least a first ranging signal frame and a second ranging signal frame, and a first sending time interval between the first ranging signal frame and the second ranging signal frame is randomly generated; and the initiating device receives measurement information returned, based on the ranging signal, by the responding device.

In a possible implementation of the fifth aspect, the method further includes: The initiating device sends an auxiliary signal to the responding device, where a second sending time interval between the auxiliary signal and the ranging signal is randomly generated, and the auxiliary signal is used to carry configuration information of the ranging signal.

In a possible implementation of the fifth aspect, the ranging signal is an ultra-wideband frame, and the auxiliary signal is a narrowband frame.

In a possible implementation of the fifth aspect, the second ranging signal frame is received by the responding device after the first sending time interval elapses since the responding device receives the first ranging signal frame.

In a possible implementation of the fifth aspect, the method further includes: The initiating device sends a time ciphertext to the responding device, for the responding device to decrypt the time ciphertext based on a preset key, to obtain the first sending time interval, where the time ciphertext is obtained by encrypting the first sending time interval by the initiating device based on the preset key.

In a possible implementation of the fifth aspect, the first sending time interval is randomly generated by the initiating device and the responding device based on a same algorithm.

In a possible implementation of the fifth aspect, the method further includes: determining a distance between the initiating device and the responding device based on a sending time for the ranging signal and a receiving time for the measurement information.

A sixth aspect of this application provides an information transmission method. The method includes: A responding device receives a ranging signal sent by an initiating device, where the ranging signal includes at least a first ranging signal frame and a second ranging signal frame, and a first sending time interval between the first ranging signal frame and the second ranging signal frame is randomly generated; and the responding device sends measurement information to the initiating device based on the ranging signal.

In a possible implementation of the sixth aspect, the method further includes: The responding device receives an auxiliary signal sent by the initiating device, where a second sending time interval between the auxiliary signal and the ranging signal is randomly generated, and the auxiliary signal is used to carry configuration information of the ranging signal.

In a possible implementation of the sixth aspect, the ranging signal is an ultra-wideband frame, and the auxiliary signal is a narrowband frame.

In a possible implementation of the sixth aspect, the responding device is specifically configured to receive the second ranging signal frame after the first sending time interval elapses since the responding device receives the first ranging signal frame.

In a possible implementation of the sixth aspect, the method further includes: The responding device receives a time ciphertext sent by the initiating device, and decrypts the time ciphertext based on a preset key, to obtain the first sending time interval, where the time ciphertext is obtained by encrypting the first sending time interval by the initiating device based on the preset key.

In a possible implementation of the sixth aspect, the first sending time interval is randomly generated by the initiating device and the responding device based on a same algorithm.

A seventh aspect of this application provides an information transmission method. The method includes: An initiating device sends an auxiliary signal to a responding device; the initiating device sends a ranging signal to the responding device, where a first sending time interval between the auxiliary signal and the ranging signal is randomly generated, and the auxiliary signal is used to carry configuration information of the ranging signal; and the initiating device receives measurement information returned, based on the ranging signal, by the responding device.

In a possible implementation of the seventh aspect, the ranging signal includes at least a first ranging signal frame and a second ranging signal frame, and a second sending time interval between the first ranging signal frame and the second ranging signal frame is randomly generated.

In a possible implementation of the seventh aspect, the ranging signal is an ultra-wideband frame, and the auxiliary signal is a narrowband frame.

In a possible implementation of the seventh aspect, the ranging signal is received by the responding device after the first sending time interval elapses since the responding device receives the auxiliary signal.

In a possible implementation of the seventh aspect, the method further includes: The initiating device sends a time ciphertext to the responding device, for the responding device to decrypt the time ciphertext based on a preset key, to obtain the first sending time interval, where the time ciphertext is obtained by encrypting the first sending time interval by the initiating device based on the preset key.

In a possible implementation of the seventh aspect, the first sending time interval is randomly generated by the initiating device and the responding device based on a same algorithm.

In a possible implementation of the seventh aspect, the method further includes: The initiating device determines a distance between the initiating device and the responding device based on a sending time for the ranging signal and a receiving time for the measurement information.

An eighth aspect of this application provides an information transmission method. The method includes: A responding device receives an auxiliary signal sent by an initiating device; the responding device receives a ranging signal sent by the initiating device, where a first sending time interval between the auxiliary signal and the ranging signal is randomly generated, and the auxiliary signal is used to carry configuration information of the ranging signal; and the responding device sends measurement information to the initiating device based on the ranging signal.

In a possible implementation of the eighth aspect, the ranging signal includes at least a first ranging signal frame and a second ranging signal frame, and a second sending time interval between the first ranging signal frame and the second ranging signal frame is randomly generated.

In a possible implementation of the eighth aspect, the ranging signal is an ultra-wideband frame, and the auxiliary signal is a narrowband frame.

In a possible implementation of the eighth aspect, the responding device is specifically configured to receive the second ranging signal frame after the first sending time interval elapses since the responding device receives the first ranging signal frame.

In a possible implementation of the eighth aspect, the method further includes: The responding device receives a time ciphertext sent by the initiating device, and decrypts the time ciphertext based on a preset key, to obtain the first sending time interval, where the time ciphertext is obtained by encrypting the first sending time interval by the initiating device based on the preset key.

In a possible implementation of the eighth aspect, the first sending time interval is randomly generated by the initiating device and the responding device based on a same algorithm.

Any one of the second aspect to the eighth aspect and the possible implementations of the second aspect to the eighth aspect provided in this application has same beneficial effects as any one of the first aspect or the possible implementations of the first aspect of this application.

A ninth aspect of this application provides a communication system. The communication system includes the initiating device according to any one of the first aspect or the possible implementations of the first aspect and the responding device according to any one of the second aspect or the possible implementations of the second aspect.

A tenth aspect of this application provides a communication system. The communication system includes the initiating device according to any one of the third aspect or the possible implementations of the third aspect and the responding device according to any one of the fourth aspect or the possible implementations of the fourth aspect.

An eleventh aspect of this application provides an electronic device. The electronic device includes a processor, a communication interface, and a memory. The memory is configured to store program code, and the processor is configured to invoke the program code in the memory, to enable the processor to perform the method according to any one of the fifth aspect or the possible implementations of the fifth aspect, the sixth aspect or the possible implementations of the sixth aspect, the seventh aspect or the possible implementations of the seventh aspect, and the eighth aspect or the possible implementations of the eighth aspect.

A twelfth aspect of this application provides a computer-readable storage medium storing one or more computer-executable instructions. When the computer-executable instructions are executed by a processor, the processor performs the method according to any one of the fifth aspect or the possible implementations of the fifth aspect, the sixth aspect or the possible implementations of the sixth aspect, the seventh aspect or the possible implementations of the seventh aspect, and the eighth aspect or the possible implementations of the eighth aspect.

A thirteenth aspect of this application provides a computer program product storing one or more computer-executable instructions. When the computer-executable instructions are executed by a processor, the processor performs the method according to any one of the fifth aspect or the possible implementations of the fifth aspect, the sixth aspect or the possible implementations of the sixth aspect, the seventh aspect or the possible implementations of the seventh aspect, and the eighth aspect or the possible implementations of the eighth aspect.

A fourteenth aspect of this application provides a chip system. The chip system includes at least one processor and an interface. The interface is configured to receive data and/or a signal, and the at least one processor is configured to support a computer device in implementing a function involved in any one of the fifth aspect or the possible implementations of the fifth aspect, the sixth aspect or the possible implementations of the sixth aspect, the seventh aspect or the possible implementations of the seventh aspect, and the eighth aspect or the possible implementations of the eighth aspect. In a possible design, the chip system further includes a memory. The memory is configured to store program instructions and data that are necessary for a computer device. The chip system may include a chip, or may include a chip and another discrete component.

It may be learned from the foregoing technical solutions that embodiments of this application have the following advantages:
a sending time interval at which the initiating device sends a plurality of ranging signal frames to the responding device is randomly generated, so that an attacker cannot determine a rule of sending the ranging signal by the initiating device to the responding device, and cannot send an interference signal at a same moment to perform interference and an attack, thereby ensuring information security of electronic devices during interactive communication.

### BRIEF DESCRIPTION OF DRAWINGS

FIG. 1A to FIG. 1E are diagrams of application scenarios according to an embodiment of this application;
FIG. 2 is a diagram of an embodiment of an initiating device and a responding device according to an embodiment of this application;
FIG. 3 is a diagram of an embodiment of interaction between an initiating device and a responding device according to an embodiment of this application;
FIG. 4 is a diagram of another embodiment of an initiating device according to an embodiment of this application;
FIG. 5 is a diagram of another embodiment of interaction between an initiating device and a responding device according to an embodiment of this application;
FIG. 6 is a diagram of another embodiment of an initiating device and a responding device according to an embodiment of this application;
FIG. 7 is a diagram of another embodiment of interaction between an initiating device and a responding device according to an embodiment of this application;
FIG. 8 is a diagram of another embodiment of an initiating device and a responding device according to an embodiment of this application;
FIG. 9 is a diagram of another embodiment of interaction between an initiating device and a responding device according to an embodiment of this application;
FIG. 10 is a diagram of another embodiment of an initiating device and a responding device according to an embodiment of this application;
FIG. 11 is a diagram of an embodiment of an information transmission method according to an embodiment of this application;
FIG. 12 is a diagram of another embodiment of an information transmission method according to an embodiment of this application;
FIG. 13 is a diagram of another embodiment of an information transmission method according to an embodiment of this application;
FIG. 14 is a diagram of an embodiment of a communication system according to an embodiment of this application; and
FIG. 15 is a diagram of an embodiment of an electronic device according to an embodiment of this application.

### DESCRIPTION OF EMBODIMENTS

The following describes embodiments of this application with reference to the accompanying drawings. It is clear that the described embodiments are merely a part rather than all of embodiments of this application. A person of ordinary skill in the art may know that with development of technologies and emergence of new scenarios, technical solutions provided in embodiments of this application are also applicable to similar technical problems.

In the specification, claims, and accompanying drawings of this application, terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that, this application can also be implemented without some specific details. In some instances, methods, means, elements, and circuits that are well-known to a person skilled in the art are not described in detail, so that the subject matter of this application is highlighted.

Embodiments of this application provide an initiating device, a responding device, and an information transmission method, to ensure information security of electronic devices during interactive communication. Embodiments of this application further provide a corresponding communication system, electronic device, computer-readable storage medium, and the like. Details are separately described below.

The following describes examples of an application scenario of embodiments of this application.

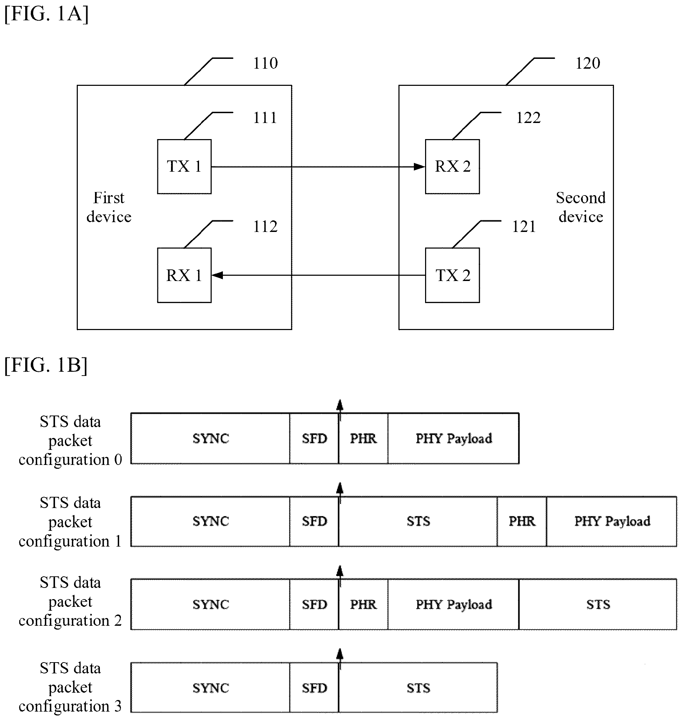

During interworking and positioning between electronic devices or wireless products/devices such as internet of things (internet of things, IoT) devices, wireless communication interaction needs to be performed between the devices. For example, as shown in FIG. 1A, based on an ultra-wideband (ultra-wideband, UWB) wireless technology, a transmit end (TX 1) 111 of a first device 110 sends an ultra-wideband signal frame to a receive end (RX 2) 122 of a second device 120, and the second device 120 responds, and returns an ultra-wideband signal frame to a receive end (RX 1) 112 of the first device 110 via a transmit end (TX 2) 121 of the second device 120.

As shown in FIG. 1B, the first device 110 and the second device 120 use an impulse radio-UWB (impulse radio-UWB, IR-UWB) ranging protocol that is specifically an HPR UWB protocol of IEEE802.15a/z. A signal format defined in the protocol supports data transmission and ranging functions, and ranging is completed by using a channel impulse response (channel impulse response, CIR) training sequence in an ultra-wideband signal frame. In addition, to enhance a security protection capability, a long fragment of scrambled timestamp sequence (scrambled timestamp sequence, STS) data is added to the ultra-wideband signal frame for security protection, for example, an STS data packet configuration 0 includes a SYNC field, an SFD field, a PHR field, and a PHY payload field, but an STS is added to each of an STS data packet configuration 1, an STS data packet configuration 2, and an STS data packet configuration 3.

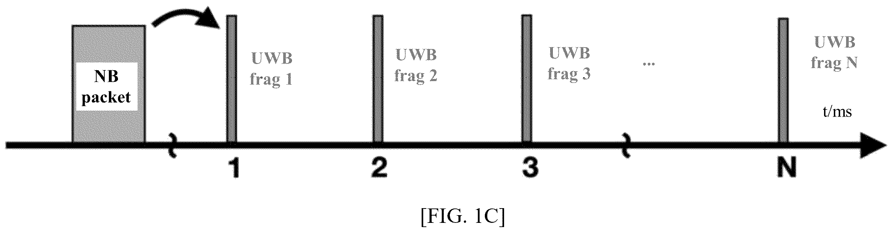

As shown in FIG. 1C, the first device 110 and the second device 120 may further perform interactive communication by using a narrow band assisted ultra-wideband (narrow band assisted ultra-wideband, NBA-NB) technology. A narrowband (narrowband, NB) signal, namely, a narrowband frame (NB packet), provides time synchronization information for an ultra-wideband frame (UWB fragment) signal. An ultra-wideband frame including, for example, a UBA frag 1, a UWB frag 2, a UWB frag 3, ..., and a UWB frag N, completes ranging.

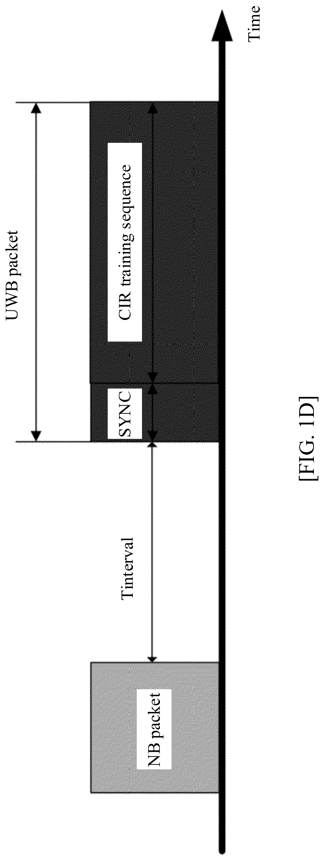

Specifically, as shown in FIG. 1D, a complete ranging frame includes a narrowband frame (NB packet) and an ultra-wideband frame (UWB packet). The narrowband frame provides initial synchronization information to assist the UWB frame in ranging. The ultra-wideband frame includes a SYNC field and a CIR training sequence (CIR training sequence, CTS) field. The SYNC field is used to complete time-frequency synchronization of a signal, and the CTS is used to calculate a CIR and complete ranging. There is a specific time interval (T interval) between sending of the narrowband frame and sending of the wideband frame.

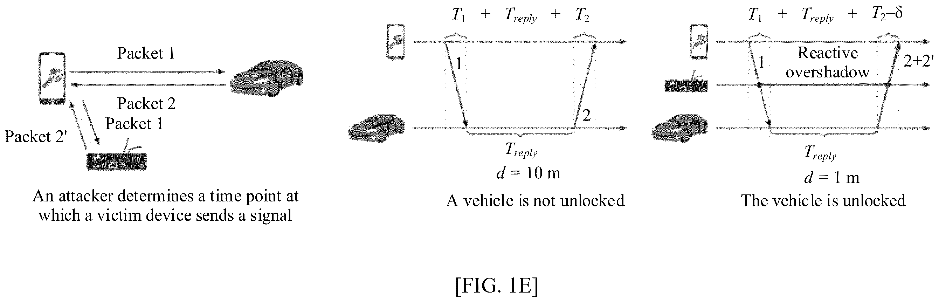

As shown in FIG. 1E, for the IR-UWB ranging technology under the IEEE 802.15.4z standard, there is currently an instance in which an STS is successful attacked. For example, in a scenario in which a vehicle is unlocked via a mobile terminal, an attacker sends an attack signal at a same time to interfere with a real signal. As a result, an error occurs in first-path detection, and a measurement distance is reduced, resulting a misjudgment. An implementation basis of this attack mode is that, in an attack preparation phase, the attacker needs to attempt, through observation, to find a time point that is consistent with that of a victim device, and sends an overshadow (overshadow) signal to implement an attack. For example, a mobile terminal that can unlock a vehicle and the vehicle may send a packet 1 and a packet 2 to each other to determine a distance between the mobile terminal and the vehicle. After receiving the packet 1 sent by the mobile terminal, an attacker returns a packet 2' (overshadow signal) to the mobile terminal. A distance between the mobile terminal serving as a key and the vehicle is 10 meters. A time of flight (time of flight, TOF) of the mobile device and the vehicle is T₁ + T_{reply} + T₂. At this moment, the distance is excessively long, and the vehicle is not unlocked. However, after the attacker finds a time point that is consistent with that of a victim device and sends an overshadow signal, the attacker sends the overshadow signal at the same time point, and the vehicle may mistakenly consider that the overshadow signal is an early copy of a valid signal sent by the mobile terminal, therefore incorrectly determine that a distance between the mobile terminal and the attacker is the distance between the mobile terminal and the vehicle, determine the TOF as *T*₁ *+ T_{reply} + T*₂ *- δ,* and obtain the distance being 1 meter. At this moment, the vehicle is successfully unlocked by the attacker.

The following describes the initiating device and the responding device provided in embodiments of this application by using examples with reference to the foregoing application scenarios.

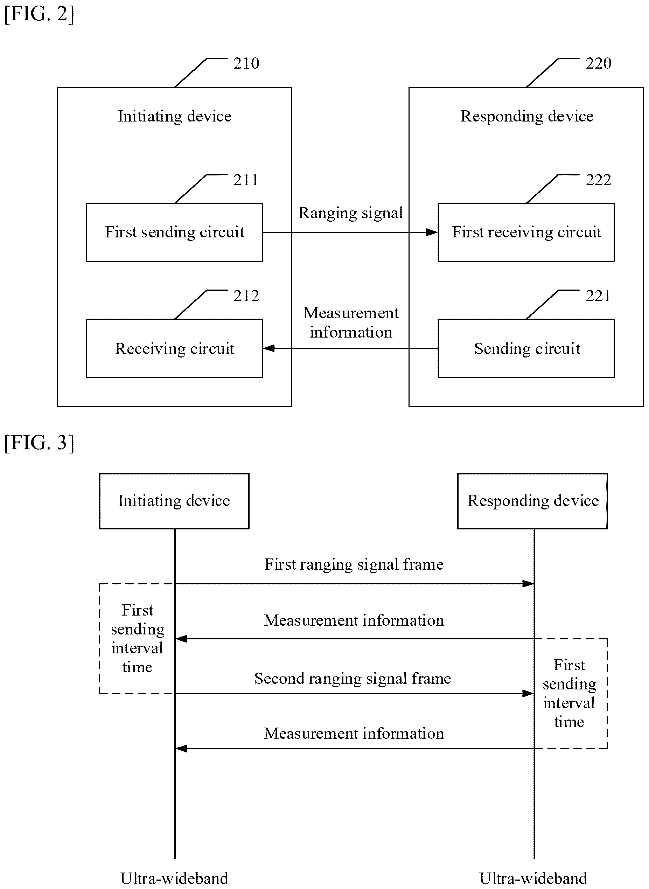

As shown in FIG. 2, an embodiment of an initiating device 210 according to an embodiment of this application includes a first sending circuit 211 and a receiving circuit 212, and an embodiment of a responding device 220 according to this embodiment of this application includes a first receiving circuit 222 and a sending circuit 221.

Specifically, in the initiating device 210, the first sending circuit 211 is configured to send a ranging signal to the responding device 220, and the receiving circuit 212 is configured to receive measurement information returned, based on the ranging signal, by the responding device 220. In the responding device 220, the first receiving circuit 222 is configured to receive the ranging signal sent by the initiating device 210, and the sending circuit 221 is configured to send the measurement information to the initiating device 210 based on the ranging signal. The ranging signal includes at least a first ranging signal frame and a second ranging signal frame, and a first sending time interval between the first ranging signal frame and the second ranging signal frame is randomly generated.

It should be understood that the initiating device 210 and the responding device 220 are movable. To obtain a most accurate real-time distance, the ranging signal may further include a third ranging signal frame, a fourth ranging signal frame, and the like. A quantity of ranging signal frames in the ranging signal is not limited in embodiments of this application.

For example, as shown in FIG. 3, both an initiating device and a responding device are mobile terminals. When the initiating device needs to determine a location of the responding device, the initiating device sends a ranging signal to the responding device. The ranging signal is an ultra-wideband frame (UWB packet). To be specific, the ranging signal includes at least a first UWB frame (a first ranging signal frame) and a second UWB frame (a second ranging signal frame). When a first sending circuit of the initiating device receives a ranging command (the ranging command may be from a central processing unit of the initiating device), the first sending circuit sends the first UWB frame to the responding device. A first receiving circuit of the responding device receives the first UWB frame, and the responding device generates measurement information based on the first UWB frame. The measurement information is specifically a UWB frame. The responding device continues to send the measurement information to the initiating device via a sending circuit of the responding device. A receiving circuit of the initiating device receives the measurement information, to complete one ultra-wideband frame exchange. After sending the first UWB frame, the initiating device starts to wait, and after a first sending time interval elapses, the first sending circuit of the initiating device continues to send the second UWB frame to the responding device. Similarly, after receiving the first UWB frame, the responding device starts to wait, and after the first sending time interval elapses, the first receiving circuit of the responding device starts to receive a signal. At this moment, the second UWB frame may be received just in time. In other words, the second UWB frame is received by the responding device after the first sending time interval elapses since the responding device receives the first UWB frame.

The ranging signal and the measurement information include data, for example, data including a synchronization (SYNC) field and a CIR training sequence (CIR training sequence, CTS). The SYNC field is used to complete time-frequency synchronization of the ranging signal, and the CTS is used to calculate a CIR and complete ranging. The data may include information, or may not include information. This is not limited in embodiments of this application.

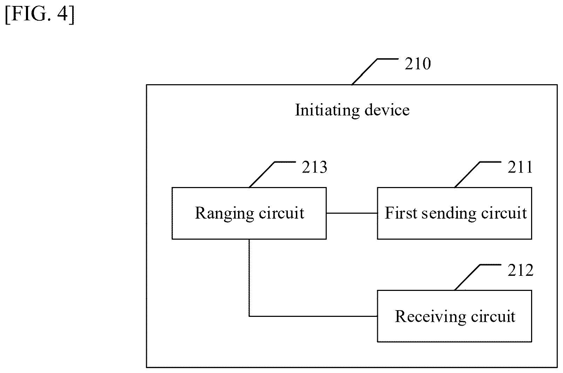

Optionally, the initiating device may further continue to send a third UWB frame, a fourth UWB frame, and the like to the responding device. An exchange manner is the same as the foregoing manner. As shown in FIG. 4, the initiating device 210 further includes a ranging circuit 213. After the exchange is completed, the ranging circuit 213 obtains a sending time for the ranging signal from the first sending circuit 211, obtains a receiving time for the measurement information from the receiving circuit 212, and determines a distance between the initiating device 210 and the responding device based on the sending time for the ranging signal and the receiving time for the measurement information, that is, determines the distance between the initiating device 210 and the responding device based on a time of flight (time of flight, TOF) of sending the UWB frames and receiving the measurement information by the initiating device 210 and calculation of the CTS.

Optionally, the initiating device may further, based on the measurement information, obtain an angle between the initiating device and the responding device, or generate an absolute coordinate system between the initiating device and the responding device, to determine a specific location of the responding device based on information like the distance and the angle. A specific implementation is not limited in embodiments of this application.

Because the first sending time interval is randomly generated, to enable the responding device to obtain a same first sending time interval in one exchange, there are specifically the following two implementations.

### Implementation 1: Based on a symmetric key algorithm

Before the first sending circuit of the initiating device sends the first UWB frame to the responding device, the initiating device randomly generates a random number within a preset range based on an advanced encryption standard (advanced encryption standard, AES) algorithm, may directly use the random number generated by using the AES algorithm as the first sending time interval or use, as the first sending time interval, a numeric value obtained by performing preset processing on the random number, and encrypts the first sending time interval based on a preset key to obtain a time ciphertext. Then, the first sending circuit sends the time ciphertext to the responding device. The responding device also knows the preset key. Therefore, after receiving the time ciphertext, the first receiving circuit of the responding device may decrypt the time ciphertext by using the preset key, to obtain the first sending time interval.

Similarly, before the first sending circuit of the initiating device sends the second UWB frame to the responding device, the initiating device randomly generates a new sending time interval, and sends, in a time ciphertext manner, the new sending time interval to the responding device for decryption. At this moment, the responding device may also obtain the new sending time interval. The initiating device sends the third UWB frame after the new sending time interval elapses since the initiating device sends the second UWB frame. The responding device performs receiving after the new sending time interval elapses since the responding device receives the second UWB frame, and can receive the third UWB frame just in time. The rest may be deduced by analogy.

### Implementation 2: Based on a same algorithm

Before the first sending circuit of the initiating device sends the first UWB frame to the responding device, both the initiating device and the responding device obtain a same random reference value, and then input the reference value into a preset algorithm, to obtain a same output value. The output value may serve as the first sending time interval. The preset algorithm may be any algorithm, for example, any function or formula. After a reference value is input, one output value may be obtained. The initiating device and the responding device may obtain a same output value provided that random reference values obtained by the initiating device and the responding device are the same, to determine the same first sending time interval.

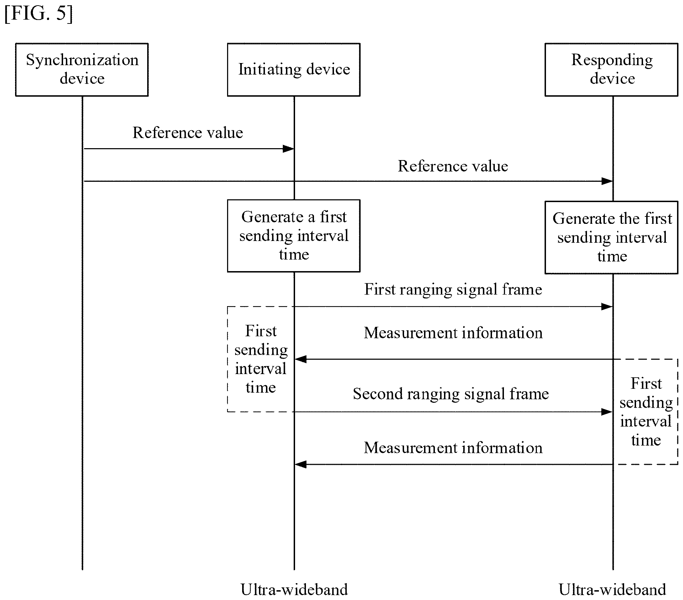

The reference value may be generated by the initiating device and then transmitted to the responding device, or may be separately delivered by an additional synchronization device. As shown in FIG. 5, a synchronization device generates a random number based on any algorithm, and then separately delivers the random number as a reference value to an initiating device and a responding device, so that both the initiating device and the responding device generate a same first sending time interval based on the reference value.

Optionally, to further ensure security of transmission of the reference value, the preset algorithm may be rotated after each round of ranging ends, and the symmetric key algorithm may also be used for the reference value. For a specific implementation, refer to the implementation 1. Details are not described herein again.

It should be understood that, to ensure that an attacker cannot find a rule between sending time intervals, the foregoing two implementations may be combined. For example, before the first UWB frame is sent, the first sending time interval is generated in the implementation 1, and before the second UWB frame is sent, the new sending time interval is generated in the implementation 2.1.

It may be understood that, in this embodiment of this application, it only needs to be ensured that the initiating device and the responding device can obtain a same sending time interval, and each sending time interval is randomly generated. A specific manner of generating the sending time interval is not limited.

It can be learned from the foregoing two implementations that, in an attack preparation phase, the attacker attempts, through observation, to find a time point that is consistent with that of the initiating device, and sends an attack signal (for example, an overshadow signal) to interfere with a real ranging signal, to successfully attack the STS. However, based on the implementation 1, the attacker cannot determine the preset key, so that the attacker cannot find a time point at which the initiating device sends the ranging signal. Based on the implementation 2, the attacker cannot determine the reference value. Even if the reference value is intercepted once, the attacker cannot determine the preset algorithm, and therefore cannot find the time point at which the initiating device sends the ranging signal. Even if the attacker determines a sending time interval once, it is difficult for the attacker to send an attack signal in time in an extremely short time of interaction between the initiating device and the responding device. A sending time interval in a next interaction also changes. Therefore, when the sending time interval is randomly generated, the attacker cannot initiate an attack.

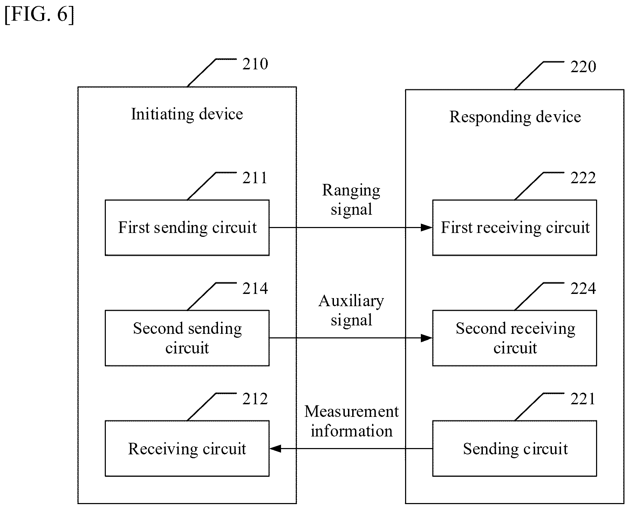

Optionally, as shown in FIG. 6, the initiating device 210 further includes a second sending circuit 214, the responding device 220 further includes a second receiving circuit 224, the second sending circuit 214 is configured to send an auxiliary signal to the responding device 220, and the second receiving circuit 224 is configured to receive the auxiliary signal sent by the initiating device 210. A second sending time interval between the auxiliary signal and the ranging signal is randomly generated, and the auxiliary signal is used to carry configuration information of the ranging signal. After receiving the auxiliary signal, the responding device 220 also returns auxiliary information to the initiating device 210.

Specifically, a narrow band assisted ultra-wideband (narrow band assisted ultra-wideband, NBA-UWB) technology is used between the initiating device 210 and the responding device 220. The ranging signal is an ultra-wideband frame, and the auxiliary signal is a narrowband frame. The narrowband frame carries configuration information of the ultra-wideband frame and provides time synchronization information for the ultra-wideband frame, and the ultra-wideband frame includes a CTS to complete ranging.

It should be understood that the narrowband frame is used to assist the initiating device and the responding device in completing initial synchronization of time-frequency information. Therefore, the ultra-wideband frame may also include a SYNC field to further accurately complete time-frequency synchronization.

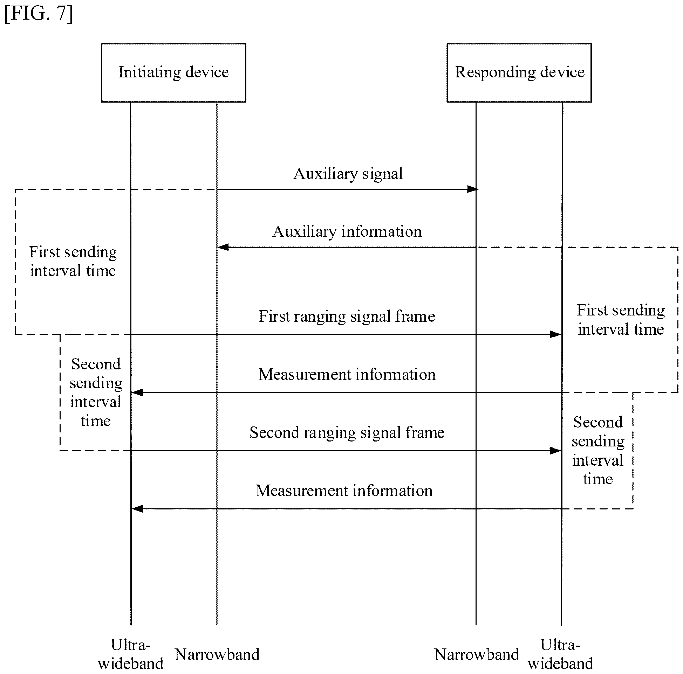

For example, as shown in FIG. 7, after an initiating device and a responding device complete exchange of an auxiliary signal for one time, the initiating device determines time-frequency synchronization information, then exchanges a ranging signal for a plurality of times based on the time-frequency synchronization information, and finally determines a distance between the initiating device and the responding device, to complete one round of ranging. In this case, both a first sending time interval and a second sending time interval are randomly generated, and the second sending time interval may be different from the first sending time interval. For example, the first sending time interval is 5 milliseconds, and the second sending time interval is 4 milliseconds. For an implementation of generating the second sending time interval, refer to that of generating the first sending time interval. Details are not described herein again. Controlling the first sending time interval and the second sending time interval is equivalent to controlling the T interval shown in FIG. 1D.

It should be understood that the auxiliary signal may alternatively be exchanged for a plurality of times.

A plurality of rounds of ranging may be performed between the initiating device and the responding device, to determine a most accurate distance. Formats, bandwidths, frequencies, and the like of the auxiliary signal and the ranging signal are not limited in embodiments of this application.

In the initiating device, a first sending circuit as a transmit end may be integrated into a UWB chip, a second sending circuit as a transmit end may be integrated into a Bluetooth chip, a receiving circuit as a receive end may be divided into an ultra-wideband part and a narrowband part that are respectively integrated into the UWB chip and the Bluetooth chip. The UWB chip and the Bluetooth chip may be packaged in one chip, the first sending circuit, the second sending circuit, and the receiving circuit may alternatively be directly designed as one chip. The responding device may have a same design. A sending time interval may be randomly generated at a physical layer or an application layer of a UWB chip, a Bluetooth chip, or a specific system on chip (system on chip, SOC) of the initiating device. Specific hardware structures and implementations of the initiating device and the responding device are not limited in embodiments of this application.

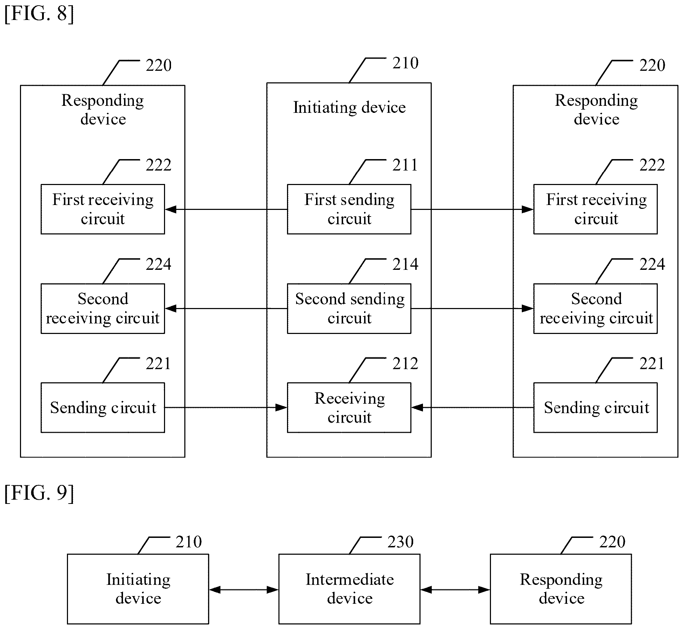

Optionally, as shown in FIG. 8, the initiating device 210 may simultaneously perform ranging with a plurality of responding devices 220. Specific implementations are the same, and a difference lies in that when sending time intervals are generated in the foregoing implementation 1, the initiating device 210 and each different responding device 220 may use a different preset key.

Optionally, as shown in FIG. 9, when the initiating device 210 cannot directly send a ranging signal or an auxiliary signal to the responding device 220, the initiating device 210 may complete ranging with the responding device 220 via an intermediate device 230. For example, the initiating device 210 completes ranging with the intermediate device 230 in the foregoing manner, then controls the intermediate device 230 to complete ranging with the responding device 220, obtains information like angles and coordinates between the three devices, and finally determines a distance, locations, or the like between the initiating device 210 and the responding device 220.

In this embodiment of this application, the sending time interval at which the initiating device sends the ranging signals to the responding device is randomly generated, so that the attacker cannot determine a rule of sending the ranging signal by the initiating device to the responding device, and cannot send an interference signal at a same moment to perform interference and an attack, thereby ensuring information security of electronic devices during interactive communication.

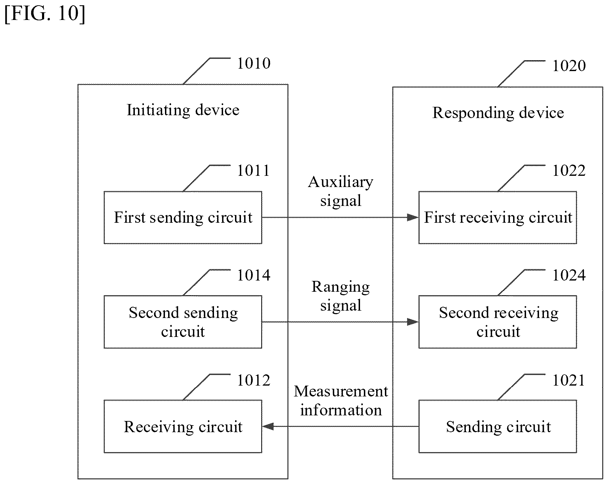

As shown in FIG. 10, another embodiment of an initiating device 1010 according to an embodiment of this application includes a first sending circuit 1011, a second sending circuit 1014, and a receiving circuit 1012, and another embodiment of a responding device 1020 includes a first receiving circuit 1022, a second receiving circuit 1024, and a sending circuit 1021.

Specifically, in the initiating device 1010, the first sending circuit 1011 is configured to send an auxiliary signal to the responding device 1020, the second sending circuit 1014 is configured to send a ranging signal to the responding device 1020, and the receiving circuit 1012 is configured to receive measurement information returned, based on the ranging signal, by the responding device 1020. In the responding device 1020, the first receiving circuit 1022 is configured to receive the auxiliary signal sent by the initiating device 1010, the second receiving circuit 1024 is configured to receive the ranging signal sent by the initiating device 1010, and the sending circuit 1021 is configured to send the measurement information to the initiating device 1010 based on the ranging signal. A first sending time interval between the auxiliary signal and the ranging signal is randomly generated, and the auxiliary signal is used to carry configuration information of the ranging signal.

An NBA-UWB technology is used between the initiating device 1010 and the responding device 1020. The ranging signal is an ultra-wideband frame, and the auxiliary signal is a narrowband frame. In one round of ranging, the ranging signal may include only one ultra-wideband frame.

Optionally, the ranging signal includes at least a first ranging signal frame and a second ranging signal frame, and a second sending time interval between the first ranging signal frame and the second ranging signal frame is randomly generated. The first receiving circuit is specifically configured to receive the second ranging signal frame after the first sending time interval elapses since the first receiving circuit receives the first ranging signal frame, that is, the ranging signal is received by the responding device after the first sending time interval elapses since the responding device receives the auxiliary signal. The initiating device further includes a ranging circuit. The ranging circuit is configured to determine a distance between the initiating device and the responding device based on a sending time for the ranging signal and a receiving time for the measurement information.

Optionally, the first sending circuit is further configured to send a time ciphertext to the responding device, for the responding device to decrypt the time ciphertext based on a preset key, to obtain the first sending time interval, where the time ciphertext is obtained by encrypting the first sending time interval by the initiating device based on the preset key.

Optionally, the first sending time interval is randomly generated by the initiating device and the responding device based on a same algorithm.

For a specific implementation of the initiating device and the responding device provided in this embodiment of this application, refer to the initiating device and the responding device described in FIG. 2 to FIG. 9 in the foregoing embodiment. A difference lies only in that descriptions of "first" and "second" are interchanged. Same beneficial effects are achieved. Details are not described herein again.

The foregoing describes the initiating device and the responding device provided in embodiments of this application. The following describes the information transmission method provided in embodiments of this application.

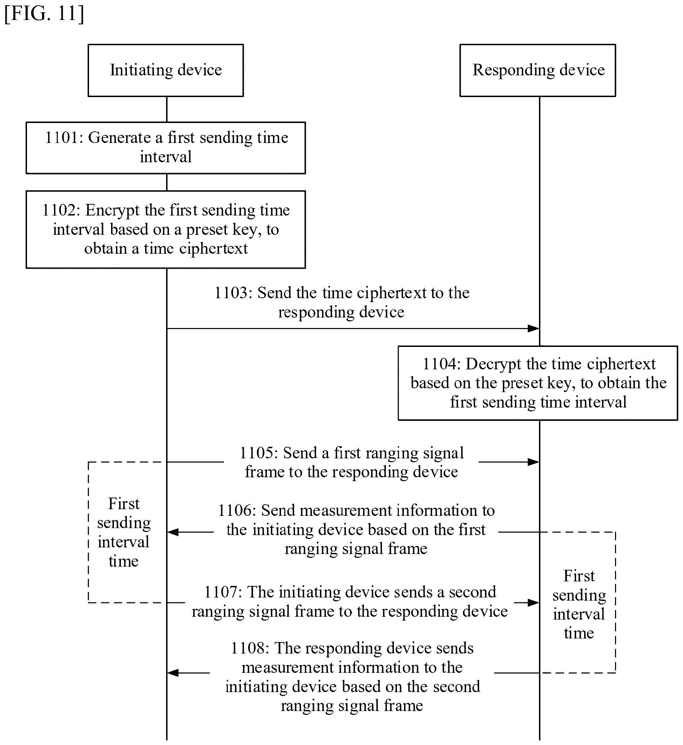

As shown in FIG. 11, an embodiment of an information transmission method according to an embodiment of this application includes the following steps.

1101: An initiating device generates a first sending time interval.

1102: The initiating device encrypts the first sending time interval based on a preset key, to obtain a time ciphertext.

1103: The initiating device sends the time ciphertext to a responding device.

1104: The responding device decrypts the time ciphertext based on the preset key, to obtain the first sending time interval.

1105: The initiating device sends a first ranging signal frame to the responding device.

1106: The responding device sends measurement information to the initiating device based on the first ranging signal frame.

1107: The initiating device sends a second ranging signal frame to the responding device.

1108: The responding device sends measurement information to the initiating device based on the second ranging signal frame.

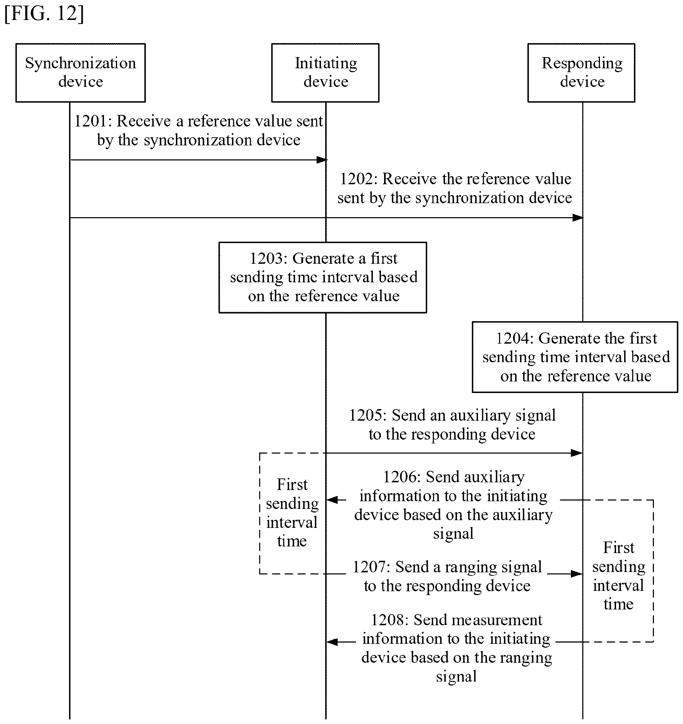

As shown in FIG. 12, another embodiment of an information transmission method according to an embodiment of this application includes the following steps.

1201: An initiating device receives a reference value sent by a synchronization device.

1202: A responding device receives the reference value sent by the synchronization device.

1203: The initiating device generates a first sending time interval based on the reference value.

1204: The responding device generates the first sending time interval based on the reference value.

1205: The initiating device sends an auxiliary signal to the responding device.

1206: The responding device sends auxiliary information to the initiating device based on the auxiliary signal.

1207: The initiating device sends a ranging signal to the responding device.

1208: The responding device sends measurement information to the initiating device based on the ranging signal.

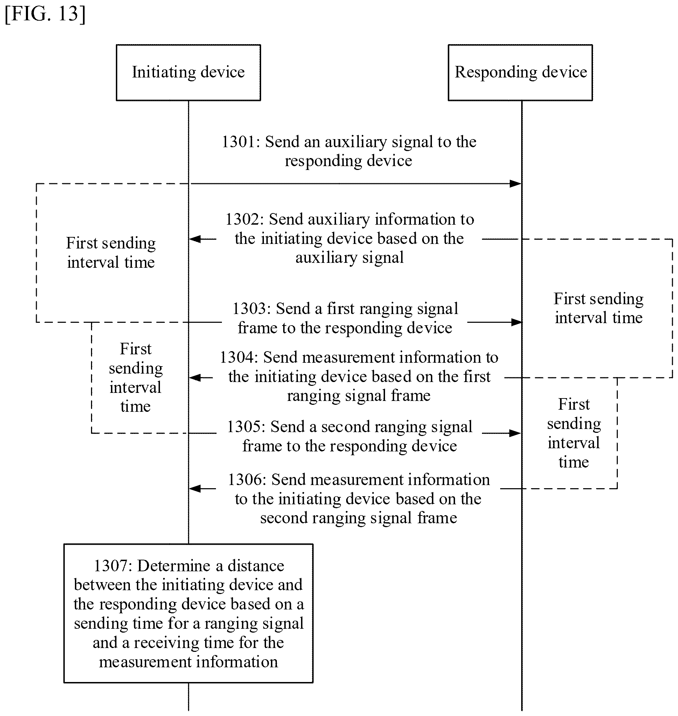

As shown in FIG. 13, another embodiment of an information transmission method according to an embodiment of this application includes the following steps.

1301: An initiating device sends an auxiliary signal to a responding device.

1302: The responding device sends auxiliary information to the initiating device based on the auxiliary signal.

1303: The initiating device sends a first ranging signal frame to the responding device.

1304: The responding device sends measurement information to the initiating device based on the first ranging signal frame.

1305: The initiating device sends a second ranging signal frame to the responding device.

1306: The responding device sends measurement information to the initiating device based on the second ranging signal frame.

1307: The initiating device determines a distance between the initiating device and the responding device based on a sending time for a ranging signal and a receiving time for the measurement information.

In the information transmission methods provided in FIG. 11 to FIG. 13, for specific implementations of the initiating device and the responding device, refer to the initiating device and the responding device described in FIG. 2 to FIG. 9. Same beneficial effects are achieved. Details are not described herein again in embodiments of this application.

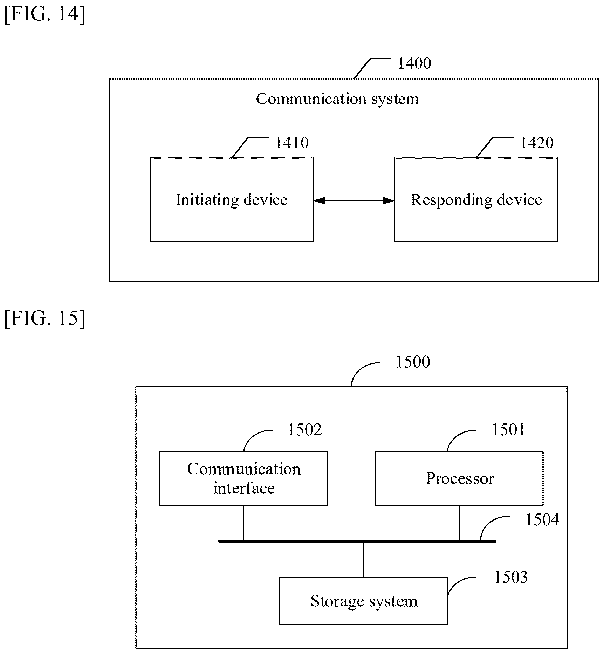

As shown in FIG. 14, an embodiment of a communication system 1400 according to an embodiment of this application includes an initiating device 1410 and a responding device 1420. For a specific implementation of the initiating device 1410 and the responding device 1420, refer to the initiating device and the responding device described in FIG. 2 to FIG. 10. Same beneficial effects are achieved. Details are not described herein again in this embodiment of this application.

FIG. 15 is a diagram of a possible logical structure of an electronic device 1500 according to an embodiment of this application. The electronic device 1500 includes a processor 1501, a communication interface 1502, a storage system 1503, and a bus 1504. The processor 1501, the communication interface 1502, and the storage system 1503 are connected to each other through the bus 1504. In this embodiment of this application, the processor 1501 is configured to control and manage an action of the electronic device 1500. For example, the processor 1501 is configured to perform the information transmission methods described in the embodiments in FIG. 11 to FIG. 13. The communication interface 1502 is configured to support the electronic device 1500 in performing communication. The storage system 1503 is configured to store program code and data of the electronic device 1500.

The processor 1501 may be a central processing unit, a general-purpose processor, a digital signal processor, an application-specific integrated circuit, a field programmable gate array or another programmable logic device, a transistor logic device, a hardware component, or any combination thereof. The processor 1501 may implement or execute various example logical blocks, modules, and circuits described with reference to content disclosed in this application. Alternatively, the processor 1501 may be a combination of processors implementing a computing function, for example, a combination of one or more microprocessors, or a combination of a digital signal processor and a microprocessor. The bus 1504 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, the bus is represented by using only one bold line in FIG. 15. However, it does not indicate that there is only one bus or only one type of bus.

In another embodiment of this application, a computer-readable storage medium is further provided. The computer-readable storage medium stores computer-executable instructions. When at least one processor of a device executes the computer-executable instructions, the device performs the information transmission methods described in the embodiments in FIG. 11 to FIG. 13.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium, and the at least one processor executes the computer-executable instructions, so that the device performs the information transmission methods described in the embodiments in FIG. 11 to FIG. 13.

In another embodiment of this application, a chip system is further provided. The chip system includes at least one processor and an interface. The interface is configured to receive data and/or a signal. The at least one processor is configured to support implementation of the information transmission methods described in the embodiments in FIG. 11 to FIG. 13. In a possible design, the chip system further includes a memory. The memory is configured to store program instructions and data that are necessary for a computer device. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. An initiating device, wherein the initiating device comprises a first sending circuit and a receiving circuit, wherein
the first sending circuit is configured to send a ranging signal to a responding device, the ranging signal comprises at least a first ranging signal frame and a second ranging signal frame, and a first sending time interval between the first ranging signal frame and the second ranging signal frame is randomly generated; and
the receiving circuit is configured to receive measurement information returned, based on the ranging signal, by the responding device.

2. The device according to claim 1, wherein the initiating device further comprises a second sending circuit, the second sending circuit is configured to send an auxiliary signal to the responding device, a second sending time interval between the auxiliary signal and the ranging signal is randomly generated, and the auxiliary signal is used to carry configuration information of the ranging signal.

3. The device according to claim 2, wherein the ranging signal is an ultra-wideband frame, and the auxiliary signal is a narrowband frame.

4. The device according to any one of claims 1 to 3, wherein the second ranging signal frame is received by the responding device after the first sending time interval elapses since the responding device receives the first ranging signal frame.

5. The device according to claim 4, wherein the first sending circuit is further configured to send a time ciphertext to the responding device, for the responding device to decrypt the time ciphertext based on a preset key, to obtain the first sending time interval, wherein the time ciphertext is obtained by encrypting the first sending time interval by the initiating device based on the preset key.

6. The device according to claim 4, wherein the first sending time interval is randomly generated by the initiating device and the responding device according to a same algorithm.

7. The device according to any one of claims 1 to 6, wherein the initiating device further comprises a ranging circuit, and the ranging circuit is configured to determine a distance between the initiating device and the responding device based on a sending time for the ranging signal and a receiving time for the measurement information.

8. A responding device, wherein the responding device comprises a first receiving circuit and a sending circuit, wherein
the first receiving circuit is configured to receive a ranging signal sent by an initiating device, the ranging signal comprises at least a first ranging signal frame and a second ranging signal frame, and a first sending time interval between the first ranging signal frame and the second ranging signal frame is randomly generated; and
the sending circuit is configured to send measurement information to the initiating device based on the ranging signal.

9. The device according to claim 8, wherein the responding device further comprises a second receiving circuit, the second receiving circuit is configured to receive an auxiliary signal sent by the initiating device, a second sending time interval between the auxiliary signal and the ranging signal is randomly generated, and the auxiliary signal is used to carry configuration information of the ranging signal.

10. The device according to claim 9, wherein the ranging signal is an ultra-wideband frame, and the auxiliary signal is a narrowband frame.

11. The device according to any one of claims 8 to 10, wherein the first receiving circuit is specifically configured to receive the second ranging signal frame after the first sending time interval elapses since the first receiving circuit receives the first ranging signal frame.

12. The device according to claim 11, wherein the first receiving circuit is further configured to: receive a time ciphertext sent by the initiating device, and decrypt the time ciphertext based on a preset key, to obtain the first sending time interval, wherein the time ciphertext is obtained by encrypting the first sending time interval by the initiating device based on the preset key.

13. The device according to claim 11, wherein the first sending time interval is randomly generated by the initiating device and the responding device according to a same algorithm.

14. An initiating device, wherein the initiating device comprises a first sending circuit, a second sending circuit, and a receiving circuit, wherein
the first sending circuit is configured to send an auxiliary signal to a responding device;
the second sending circuit is configured to send a ranging signal to the responding device, a first sending time interval between the auxiliary signal and the ranging signal is randomly generated, and the auxiliary signal is used to carry configuration information of the ranging signal; and the receiving circuit is configured to receive measurement information returned, based on the ranging signal, by the responding device.

15. The device according to claim 14, wherein the ranging signal comprises at least a first ranging signal frame and a second ranging signal frame, and a second sending time interval between the first ranging signal frame and the second ranging signal frame is randomly generated.

16. The device according to claim 14 or 15, wherein the ranging signal is an ultra-wideband frame, and the auxiliary signal is a narrowband frame.

17. The device according to any one of claims 14 to 16, wherein the ranging signal is received by the responding device after the first sending time interval elapses since the responding device receives the auxiliary signal.

18. The device according to claim 17, wherein the first sending circuit is further configured to send a time ciphertext to the responding device, for the responding device to decrypt the time ciphertext based on a preset key, to obtain the first sending time interval, wherein the time ciphertext is obtained by encrypting the first sending time interval by the initiating device based on the preset key.

19. The device according to claim 17, wherein the first sending time interval is randomly generated by the initiating device and the responding device according to a same algorithm.

20. The device according to any one of claims 14 to 19, wherein the initiating device further comprises a ranging circuit, and the ranging circuit is configured to determine a distance between the initiating device and the responding device based on a sending time for the ranging signal and a receiving time for the measurement information.

21. A responding device, wherein the responding device comprises a first receiving circuit, a second receiving circuit, and a sending circuit, wherein
the first receiving circuit is configured to receive an auxiliary signal sent by the initiating device; the second receiving circuit is configured to receive a ranging signal sent by the initiating device, a first sending time interval between the auxiliary signal and the ranging signal is randomly generated, and the auxiliary signal is used to carry configuration information of the ranging signal; and
the sending circuit is configured to send measurement information to the initiating device based on the ranging signal.

22. The device according to claim 21, wherein the ranging signal comprises at least a first ranging signal frame and a second ranging signal frame, and a second sending time interval between the first ranging signal frame and the second ranging signal frame is randomly generated.

23. The device according to claim 21 or 22, wherein the ranging signal is an ultra-wideband frame, and the auxiliary signal is a narrowband frame.

24. The device according to any one of claims 21 to 23, wherein the first receiving circuit is specifically configured to receive the second ranging signal frame after the first sending time interval elapses since the first receiving circuit receives the first ranging signal frame.

25. The device according to claim 24, wherein the first receiving circuit is further configured to: receive a time ciphertext sent by the initiating device, and decrypt the time ciphertext based on a preset key, to obtain the first sending time interval, wherein the time ciphertext is obtained by encrypting the first sending time interval by the initiating device based on the preset key.

26. The device according to claim 24, wherein the first sending time interval is randomly generated by the initiating device and the responding device according to a same algorithm.

27. An information transmission method, comprising:
sending, by an initiating device, a ranging signal to a responding device, wherein the ranging signal comprises at least a first ranging signal frame and a second ranging signal frame, and a first sending time interval between the first ranging signal frame and the second ranging signal frame is randomly generated; and
receiving, by the initiating device, measurement information returned, based on the ranging signal, by the responding device.

28. The method according to claim 27, wherein the method further comprises:
sending, by the initiating device, an auxiliary signal to the responding device, wherein a second sending time interval between the auxiliary signal and the ranging signal is randomly generated, and the auxiliary signal is used to carry configuration information of the ranging signal.

29. An information transmission method, comprising:
receiving, by a responding device, a ranging signal sent by an initiating device, wherein the ranging signal comprises at least a first ranging signal frame and a second ranging signal frame, and a first sending time interval between the first ranging signal frame and the second ranging signal frame is randomly generated; and
sending, by the responding device, measurement information to the initiating device based on the ranging signal.

30. The method according to claim 29, wherein the method further comprises:
receiving, by the responding device, an auxiliary signal sent by the initiating device, wherein a second sending time interval between the auxiliary signal and the ranging signal is randomly generated, and the auxiliary signal is used to carry configuration information of the ranging signal.

31. An information transmission method, comprising:
sending, by an initiating device, an auxiliary signal to a responding device;
sending, by the initiating device, a ranging signal to the responding device, wherein a first sending time interval between the auxiliary signal and the ranging signal is randomly generated, and the auxiliary signal is used to carry configuration information of the ranging signal; and
receiving, by the initiating device, measurement information returned, based on the ranging signal, by the responding device.

32. The method according to claim 31, wherein the ranging signal comprises at least a first ranging signal frame and a second ranging signal frame, and a second sending time interval between the first ranging signal frame and the second ranging signal frame is randomly generated.

33. An information transmission method, comprising:
receiving, by a responding device, an auxiliary signal sent by the initiating device;
receiving, by the responding device, a ranging signal sent by the initiating device, wherein a first sending time interval between the auxiliary signal and the ranging signal is randomly generated, and the auxiliary signal is used to carry configuration information of the ranging signal; and
sending, by the responding device, measurement information to the initiating device based on the ranging signal.

34. The method according to claim 33, wherein the ranging signal comprises at least a first ranging signal frame and a second ranging signal frame, and a second sending time interval between the first ranging signal frame and the second ranging signal frame is randomly generated.

35. An electronic device, comprising a processor, a communication interface, and a memory, wherein the memory is configured to store program code, and the processor is configured to invoke the program code in the memory, so that the processor performs the method according to any one of claims 27 to 34.

36. A computer-readable storage medium, wherein the computer-readable storage medium stores computer-executable instructions, and when the computer-executable instructions are executed by a processor, the method according to any one of claims 27 to 34 is implemented.
